# EUROPEAN PATENT SPECIFICATION

(11) **EP 1 585 242 B1**
(45) Date of publication and mention of the grant of the patent: **05.11.2008**
(21) Application number: 04290900.2
(22) Date of filing: 05.04.2004
(51) Int. Cl.: H04J 3/06

(54) **Method and device for distributing clock and synchronization in a telecommunication network element**
Verfahren und Vorrichtung zum Verteilen des Taktgebers und der Synchronisierung in einem Telekommunikationsnetzelement
Méthode et dispositif pour distribuer l'horloge et la synchronisation dans un élément de réseau de télécommunication

(43) Date of publication of application: 12.10.2005
(73) Proprietor: Alcatel Lucent, 75008 Paris (FR)
(72) Inventor: Skerlj, Maurizio, 34100 Trieste (IT); Cucchi, Silvio, 20083 Gaggiano (Milano) (IT); Gastaldello, Stefano, 35037 Teolo (Padova) (IT); Razzetti, Luca, 20099 Sesto San Giovanni (Milano) (IT)
(74) Representative: Colombo, Stefano Paolo

(56) References cited:
- EP-A- 1 211 834
- EP-A- 1 355 439

## Description

The present invention relates to telecommunication network elements, typically ADMs, DXCs, multiservice node apparatus, and metro area apparatus. In particular, the present invention relates to both a method and a device for providing clock and synchronization functionalities in such network elements.

As it is known, a network element, for instance an ADM (Add/Drop Multiplexers) or a DXC (Digital Cross Connect), comprises one or more input ports, backpanel connections and one or more switching matrices. The ports receive input flows in the form of frames. In the known network elements, a timing functionality is also provided. The known timing functionality is centralized and operates in order to collect various synchronization information and to perform a timing selection according to quality criteria (the preferred collected timing is selected). The generated synchronization is then distributed to several apparatus components, typically to the output ports.

The term "timing" will be used in the present description for including the provisions of a clock reference and various types of synchronizations, including the one sec synchronism for performance monitoring, the frame synchronization for the synchronization of all the frames, and the multi-frame synchronization for synchronizing the lower order tributaries.

In the known network elements, a clock reference unit (CRU) is provided for distributing the various information (clock and syncs) in a certain manner. Clock information is generally distributed according to a star topology.

The sync information, on the contrary, is distributed in various ways, including chain and cascade. In some arrangements, the sync information are locally generated at the various ports. Thus, the state of the art arrangements consist in distributing single synchronization signals, alarms and provisioning commands via separated dedicated wires or via in-band signalling using a star/chain topology. The state of the art arrangement does not allow fast and simple system scalability or upgrades since intra/ inter process data units synchronization is allowed to cascade. Moreover, it is necessary to use many dedicated wires to transmit multiple synchronisation signals, provisioning commands and alarms.

EP 1 355 439 discloses a method and system for embedding a first clock signal phase within a second signal. EP 1 211 834 discloses an improved interface system for synchronous hierarchy telecommunications networks.

In this picture, the problem to solve is providing a more efficient distribution of synchronisation signals and synchronisation information to different data process units along a datapath in a SDH (Synchronous Digital Hierarchy), SONET (Synchronous Optical NETwork) and/or OTH (Optical Transport Hierarchy) network equipment and generally in time division multiplexed systems.

A further problem to solve is broadcasting provisioning commands and information regarding the equipment status to all the data process units.

These and further problems are solved by a device according to claim 1. Further advantageous features of the present invention are set forth in the respective dependent claims. All the claims are deemed to be an integral part of the present description.

According to the present invention, a transmission channel capable of carrying SDH/SONET fundamental frequency as well as its sub-multiples, with the possibility to add other fundamental frequencies (for instance the OTH fundamental frequency), is provided. Such a channel is used to carry also broadcast information (status, alarms, presets or provisioning commands).

Advantageously, according to the present invention, the signal is distributed to all process data units from at least one CRU (clock reference unit) device through a star network.

According to a preferred embodiment, a single programmable digital delay can be set on each branch of the synchronisation network providing skew equalisation.

The synchronisation architecture according to the present invention is extremely flexible and scalable with respect to the known arrangements and provides a convenient system upgrade when it becomes required. It allows the decoupling of each data process unit from incoming transport frame and, therefore, from previous process units.

According to a first aspect, the present invention provides a device for distributing at least timing information to data processing units in a telecommunication apparatus, said data processing units comprising at least one port and at least one switching matrix, the device comprising at least one clock reference unit and a transmission channel from said at least one clock reference unit to said at least one switching matrix, wherein said synchronization transmission channel comprises a plurality of connections from said at least one clock reference unit to said data processing units, each of said connections transporting the same clock and synchronization information at a SDH/SONET fundamental frequency, as well as sub-multiples thereof, further wherein a signal transported by said synchronization transmission channel is frame structured. Optionally, said synchronization transmission channel also carries broadcast information, including status, alarms, presets and provisioning commands.

According to a preferred embodiment, said at least one clock reference unit comprises a first working clock reference unit, a second spare clock reference unit, a link connection between the first and second clock reference units and means for keeping the clock reference units duly aligned.

Each of the data processing units being connected with the first and second clock reference units comprising selecting means for selecting one of the first and second clock reference units.

Each of the at least one clock reference units comprises a frame generator for generating frames, said frames comprising a frame alignment word, counter coded information and control information relating to possible failures of the at least one clock reference unit.

According to a second aspect, the present invention provides a method for distributing at least timing information to data processing units in a telecommunication apparatus, said data processing units comprising at least one port and at least one switching matrix, the method comprising the step of providing at least one clock reference unit and a transmission channel from said at least one clock reference unit to said at least one switching matrix, wherein the method further comprises the step of providing a plurality of connections from said at least one clock reference unit to said data processing units, each of said connections transporting the same clock and synchronization information at a SDH/SONET fundamental frequency, as well as sub-multiples thereof, further wherein a signal transported by said plurality of connections is frame structured.

Optionally, said method comprises the step of carrying, through said plurality of connections, also broadcast information, including status, alarms, presets and provisioning commands.

According to a preferred embodiment, said at least one clock reference unit comprises a first working clock reference unit, a second spare clock reference unit, a link connection between the first and second clock reference units and means for keeping the first clock alignment units duly aligned.

Each of the data processing units being connected with the first and second clock reference units comprising selecting means for selecting one of the first and second clock reference units.

The step of providing at least one clock reference units comprises providing a frame generator for generating frames, said frames comprising a frame alignment word, counter coded information and control information relating to possible failures of the at least one clock reference unit.

According to a third aspect, the present invention relates to a network element comprising a device as set forth above.

The present invention will become clear from the following detailed description, to be read with reference to the attached drawings, wherein:
- Figure 1 is a diagrammatic scheme of a synchronization architecture according to the present invention;
- Figure 2 is a diagrammatic scheme of a data process unit according to the present invention;
- Figure 3 is a diagrammatic representation of a network element embodying the present invention; and
- Figure 4 diagrammatically shows a selector architecture for use in connection with the present invention.

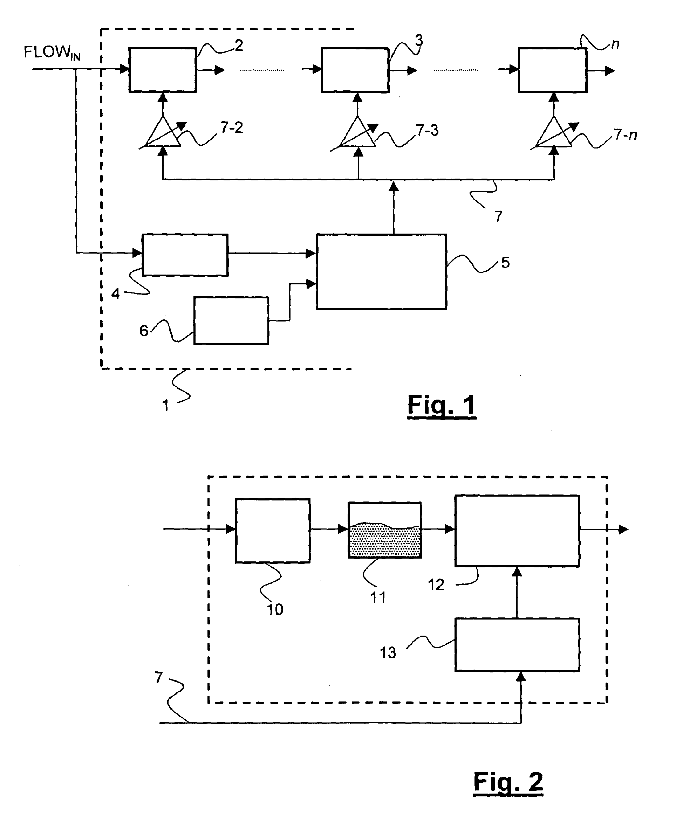

Figure 1 shows, in a diagrammatic manner, a synchronization architecture according to the present invention. An input flow FLOW_{IN}, comprising time division multiplexed frames, enters a telecommunication apparatus, such as an ADM or a DXC. The input flow FLOW_{IN} could be either SDH, SONET, OTH/OTN or the like.

The input flow FLOW_{IN} is received by a first data process unit 2, typically an input port or line unit. The input flow is also fed to a synchronization unit 4, which is connected to a synchronization channel driver 5. Said synchronization channel driver 5, in turn, is fed by a controller 6 and is connected to a synchronization channel 7 providing clock and synchronization information to a number of data process units 2, 3, n requiring to have such information. The synchronization channel 7 is fundamentally a star network providing the same information to all the data process units.

The synchronization channel 7 is distributed to all data process units (line units, switch fabrics, etc.) independently from the datapath. A programmable delay 7-2, 7-3, 7-*n* is placed on each branch of the star network 7 in order to provide delay and skew equalization. The fundamental frequency in the synchronization channel is used to generate the outgoing frame of each data unit; the first data unit 2 in the equipment 1 must contain an adaptation function (for instance, an SDH Section Adaptation), in order to be able to generate an arbitrary frame phase; the other functions simply adapt their synchronization with the programmable delay, depending on the sum of delays of all the preceding data units: moreover many functions can be put in parallel, and then connected to the same successive function (e.g. switch fabric) provided that the frame phase is equalized at the input of the common device.

A single data process unit with only its building blocks that are relevant for the present invention is diagrammatically depicted in Figure 2.

The data process unit (3, for instance) comprises a frame aligner 10, a buffer 11 and data process circuits 12. The data process circuits 12 are decoupled from the incoming TDM transport frame by buffering the information. Furthermore, the data process unit 3 comprises a synchronization port 13 connected to the synchronization channel 7.

The data process unit outputs the information according to the synchronization signals carried by the synchronization channel. The following process unit (see Figure 1) will buffer the information once again in order to process it according to its own synchronization. This allows to de-couple input and output synchronization (of course within the limit of the buffer capacity) and to de-skew some input frame phases tolerances. Some specific monitoring functions are provided to measure the buffer filling and the input to output frame phase relationship, in order to easily set up the process units inside the equipment.

The signal transmitted over the synchronisation channel is frame structured. The frame period is equal to the fastest synchronism (8 KHz). The frame period is subsequently divided in channel clock hits. Let N be the number of clock hits in every frame.

The first M bits of every frame contains a FAW (Frame Alignment Word).

In the payload, information is time multiplexed providing *N-M* time slots that can be used to transmit *N-M* different information bits (e.g. other synchronization information, broadcast alarms, broadcast provisioning commands, broadcast equipment status information, etc.).

It is possible to transmit sub-multiple synchronisation signals that have a precise phase relationship with the fundamental synchronisation signal transmitting a counter value that has an iteration period equal to the frame period. Moreover, it is possible to transmit synchronisms that are non-integer submultiples of the fastest synchronism: this can be achieved using dedicated algorithms (e.g. sigma-delta modulation).

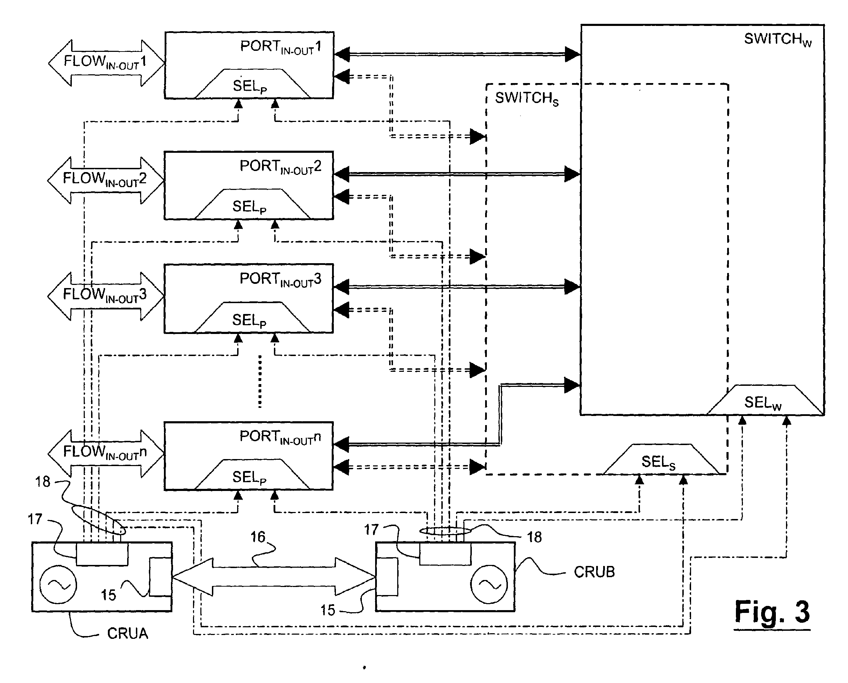

Figure 3 shows a diagrammatic representation of a network element 1 embodying the present invention. The network element comprises a number of input-output ports PORT_{IN_OUT}1, PORT_{IN-OUT}2, ..., PORT_{IN-OUT}*n* receiving respective input flows FLOW_{IN}1, FLOW_{IN}2, ..., FLOW_{IN}*n* and outputting respective output flows FLOW_{OUT}1, FLOW_{OUT}2, ..., FLOW_{OUT}*n*; and a fabric switch SWITCH_{w} which is duplicated with a spare switch SWITCHₛ for reliability reasons. According to such an embodiment, two clock reference units CRUA, CRUB are provided but only one of them is activated in a certain time, the other one is in standby. The two CRUs are frequency and phase synchronized one with each other up to the slower synchronism. In other words, all the sync information are exactly the same at the two CRUs. This synchronization is carried out by a proper circuit (15) at each CRU and a link connection (16) therebetween.

CRUA and CRUB generate coded information about frequency (clock), phase and sync and such coded information from both CRUA and CRUB reach all the data processing units (typically, ports and fabric switches) through a star network. Thus, connections 18 (indicated in Figure 3 with dot and dash lines) are provided from CRUA and from CRUB to all the ports and all the matrices.

In turn, each data processing unit is provided with selector means (SELW, SELS, SELP) for selecting one of the two sources CRUA and CRUB. The selector means of all the data processing units are set in order to select information from the very same source, the one that is in the working state. Thus, the whole apparatus is synchronized with the same timing source CRUA or CRUB.

The great advantage of such an arrangement is scalability because a new port, for instance, could be easily added. In this case, only connections from CRUA and CRUB should be provided (in addition to standard data connections to the matrices). It is not necessary to modify any provisioning of the CRUs units.

The input circuitry of the ports in the apparatus according to the present invention use the received timing information for driving the section adaptation function and thus generate synchronized frames towards the matrices. At the matrices, buffer means (FIFO) are provided. The buffer means are written at the frame phase, namely the first byte of the FAW is written in a fixed position in the buffer, than it is written in a circular manner. The buffer means are read at the phase coming from the CRU (either CRUA or CRUB).

In principle, all the data processing units receive the sync information at the same time because they are distributed in a star configuration. According to the present invention, each data processing unit is set with a programmable delay. For simplicity of the present description, the programmable delay is set zero at the input ports (the frames at the ports are in phase with respect to the synch information). The transmission of the frames from ports to matrices takes some time and the frames will reach the matrices after a certain propagation delay. Thus, at the matrix FIFO output, it is set a maximum delay which is equal to or higher than the maximum propagation delay from ports to matrix. A similar arrangement is provided at the output ports where buffer means (FIFO) are provided as well. Such output port buffers are written synchronously with the received frames and are read in accordance with the clock coming from the CRU, which is operating at that time (the one which is in the working state). The clock is delayed by a certain preset delay, which is equal to or higher than the total propagation delay (from input in the apparatus to the output).

The delays are statically provisioned at the apparatus initial provisioning.

The programmable delay solution results in extremely flexible boards. In fact, the delays depend on the system implementation, namely in which manner are the port boards arranged with respect to the matrices. This delay equalization system allows for the reuse of a certain architecture in different apparatus, for instance a new apparatus with a larger number of boards.

There will be now described in greater detail a synchronization channel.

The frames from CRUs to fabric matrices and ports have a 8 KHz structure. A 38.880 MHz clock provides the frequency. The frame synchronism is directly extracted by the recurrence of the FAW of such frames.

In addition, each frame transports also information encoded in a counter. In other words, for each frame, a counter value is increased. For instance, a module 8000 counter could be used and it is possible to synchronize all the ports up to one second (when the counter value is 0, the 1 sec sync is being received).

The frames from CRUs to fabric matrices and ports also contain information about possible failures so that the fabric switches and the ports can select either the first CRU (CRUA) or the second one (CRUB). Also when both the CRUs are in good order, the various units should select one of them according to preference commands and information transported by the synchronization channel.

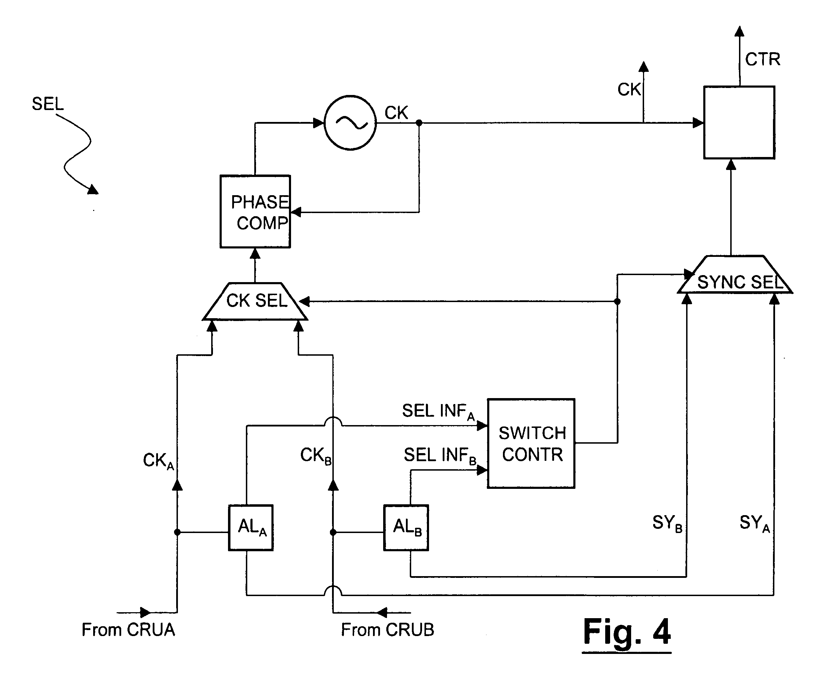

In Figure 4 a selector SEL to be used in connection with the present invention is shown. When the selector SEL is used in ports it has been designed as SELp, when it is used in the working matrix it has been indicated as SELw and finally, when it is used in the spare matrix it has been indicated as SELs. The clock signal CK_{A}, CK_{B} from CRUA and CRUB, respectively, are sent to a clock selector CK_SEL. Selection information SEL_INF_{A}, SEL_INF_{B} (including alarms, failures, preferred information or the like) are extracted from the incoming framed signal through respective aligners AL_{A}, AL_{B} and fed to a switch control SWITCH_CONTR whose output drives the clock selector and a synchronism selector SYNC_SEL. The synchronism selector SYNC_SEL, in turn, receives synchronisms SY_{A}, SY_{B} from the aligners AL_{A}, AL_{B}. The output from CK_SEL is provided to a phase comparator PHASE_COMP which locks a VCO. Finally, clock CK and synch (control) CTR information are output from the selector SEL.

The present invention is usable also in connection with other Standards, for instance with Optical Transport Hierarchy when an OTU payload is generated from a SDH/SONET payload. In this case, the OTU frequency is set at a nominal frequency which is the SDH/SONET frequency being multiplied by a proper coefficient. For instance the OTU1 nominal frequency is obtained multiplying the SDH STM-16 frequency by 255/238.

There have thus been shown and described a novel device and a novel method which fulfil all the objects and advantages sought therefore. Many changes, modifications, variations and other uses and applications of the subject invention will, however, become apparent to those skilled in the art after considering the specification and the accompanying drawings which disclose preferred embodiments thereof. All such changes, modifications, variations and other uses and applications which do not depart from the scope of the invention are deemed to be covered by the invention which is limited only by the claims which follow.

## Claims

1. A telecommunication apparatus comprising a plurality of ports (PORT), at least one switching matrix (SWITCH_{W}, SWITCH_{S}) and a device for distributing at least timing information to said plurality of ports (PORT) and said at least one switching matrix (SWITCH_{W}, SWITCH_{S}),
wherein the device comprises a first clock reference unit (CRUA) and a second clock reference unit (CRUB), and
wherein the device comprises a first synchronization transmission channel (18) from said first clock reference unit (CRUA) to each of said at least one switching matrix (SWITCH_{S}, SWITCH_{S}),
wherein the device comprises a second synchronization transmission channel (18) from said second clock reference unit (CRUB) to each of said at least one switching matrix (SWITCH_{W}, SWITCH_{S}),
wherein said first synchronization transmission channel (18) further comprises a plurality of connections directly from said first clock reference unit (CRUA) to said plurality of ports,
wherein said second synchronization transmission channel (18) further comprises a plurality of connections directly from said second clock reference unit (CRUB) to said plurality of ports,
wherein each of said connections transports the same clock and synchronization information at a SDH/SONET frequency, or sub-multiples thereof,
further wherein a signal transported by said first and second synchronization transmission channels (18) is frame structured,
further wherein each of said plurality of ports (PORT) and each of the at least one switching matrix (SWITCH_{W}, SWITCH_{S}) which are connected with the first and second clock reference units (CRUA, CRUB) comprises selecting means (SEL_{P}, SEL_{W}, SEL_{S}) for selecting between a first clock signal emitted by said first clock reference unit (CRUA) and a second clock signal emitted by said second clock reference unit (CRUB).

2. The apparatus according to claim 1, wherein said synchronization transmission channel also carries broadcast information, including status, alarms, presets and provisioning commands.

3. The apparatus according to claim 1 or 2, wherein said device comprises a link connection (16) between the first and second clock reference units (CRUA, CRUB) and means for keeping the clock reference units (CRUA, CRUB) duly aligned.

4. The apparatus according to any of the preceding claims, wherein each of the clock reference units (CRUA, CRUB) comprises a frame generator for generating frames, said frames comprising a frame alignment word, counter coded information and control information reflating to possible failures of the clock reference unit and expressed preferences to one clock reference unit.

5. The apparatus according to any of the preceding claims, wherein when an OTU payload is generated from a SDH/SONET payload, the OTU frequency is set at a nominal frequency which is the SDH/SONET frequency being multiplied by a proper coefficient.

6. The apparatus according to any of the preceding claims, wherein a programmable delay (7-2, 7-3, ... 7-n) in provided in the connections of said first and second synchronization transmission channels (18).

## Patentansprüche

1. Eine Telekommunikationsausrüstung, umfassend eine Vielzahl von Ports (PORT), mindestens eine Schaltmatrix (SWITCH_{W}, SWITCH_{S}) sowie eine Vorrichtung zum Verteilen von mindestens Zeitinformationen an die besagte Vielzahl von Ports (PORT) und die besagte mindestens eine Schaltmatrix (SWITCH_{W}, SWITCH_{S}),
wobei die Vorrichtung eine erste Taktreferenzeinheit (CRUA) und eine zweite Taktreferenzeinheit (CRUB) umfasst, und
wobei die Vorrichtung einen ersten Synchronisierungskanal (18) von der besagten ersten Taktreferenzeinheit (CRUA) an jede der besagten mindestens einen Schaltmatrix (SWITCH_{W}, SWITCH_{S}) umfasst,
wobei die Vorrichtung einen zweiten Synchronisierungskanal (18) von der besagten zweiten Taktreferenzeinheit (CRUB) an jede der besagten mindestens einen Schaltmatrix (SWITCH_{W}, SWITCH_{S}) umfasst,
wobei der besagte erste Synchronisierungskanal (18) weiterhin eine Vielzahl von direkten Verbindungen von der besagten ersten Taktreferenzeinheit (CRUA) zu der besagten Vielzahl von Ports umfasst,
wobei der besagte zweite Synchronisierungskanal (18) weiterhin eine Vielzahl von direkten Verbindungen von der besagten zweiten Taktreferenzeinheit (CRUB) zu der besagte Vielzahl von Ports umfasst,
wobei eine jede der besagten Verbindungen dieselben Takt- und Synchronisierungsinformationen bei einer SDH/SONET-Frequenz, oder Sub-Vielfache davon, transportiert,
wobei weiterhin ein von dem besagten ersten und dem besagten zweiten Synchronisierungskanal (18) transportiertes Signal eine Rahmenstruktur aufweist,
wobei weiterhin ein jeder der besagten Vielzahl von Ports (PORT) und eine jede der mindestens einen Schaltmatrix (SWITCH_{W}, SWITCH_{S}), welche mit der ersten und der zweiten Taktreferenzeinheit (CRUA, CRUB) verbunden sind, Auswählmittel (SEL_{P}, SEL_{W}, SEL_{S}) für die Auswahl zwischen einem ersten von der besagten ersten Taktreferenzeinheit (CRUA) ausgegebenen Signal und einem zweiten von der besagten zweiten Taktreferenzeinheit (CRUB) ausgegebenen Signal umfasst.

2. Die Ausrüstung nach Anspruch 1, wobei der besagte Synchronisierungskanal ebenfalls Broadcast-Informationen transportiert, einschließlich Status, Alarme, Voreinstellungen und Bereitstellungsbefehle.

3. Die Ausrüstung nach Anspruch 1 oder 2, wobei die besagte Vorrichtung eine Linkverbindung (16) zwischen der ersten und der zweiten Taktreferenzeinheit (CRUA, CRUB) sowie Mittel zum Gewährleisten der geeigneten Ausrichtung der Taktreferenzeinheiten (CRUA, CRUB) umfasst.

4. Die Ausrüstung nach einem beliebigen der vorstehenden Ansprüche, wobei eine jede der Taktreferenzeinheiten (CRUA, CRUB) einen Rahmenerzeuger zum Erzeugen von Rahmen umfasst, wobei die besagten Rahmen ein Rahmenausrichtungswort, codierte Zählerinformationen und Kontrollinformationen in Bezug auf eventuelle Störungen in der Taktreferenzeinheit sowie ausgedrückte Präferenzen für eine Taktreferenzeinheit umfassen.

5. Die Ausrüstung nach einem beliebigen der vorstehenden Ansprüche, wobei, wenn eine OTU-Payload von einer SDH/SONET-Payload erzeugt wird, die OTU-Frequenz mit einer Nennfrequenz, welche die mit einem geeigneten Koeffizienten multiplizierte SDH/SONET-Frequenz ist, eingestellt wird.

6. Die Ausrüstung nach einem beliebigen der vorstehenden Ansprüche, wobei ein programmierbarer Zeitraum (7-2, 7-3, ... 7-n) in den Verbindungen des besagten ersten und des besagten zweiten Synchronisierungskanal (18) bereitgestellt wird.

## Revendications

1. Appareil de télécommunication comprenant une pluralité de ports (PORT), au moins une matrice de commutation (SWITCHw, SWITCHs) et un dispositif destiné à distribuer au moins une information de synchronisation à ladite pluralité de ports (PORT) et à ladite au moins une matrice de commutation (SWITCHw, SWITCHs),
dans lequel le dispositif comprend une première unité de référence d'horloge (CRUA) et une seconde unité de référence d'horloge (CRUB), et
dans lequel le dispositif comprend une première voie de transmission de synchronisation (18) entre ladite première unité de référence d'horloge (CRUA) et chacune desdites au moins une matrice de commutation (SWITCHw, SWITCHs),
dans lequel le dispositif comprend une seconde voie de transmission de synchronisation (18) entre ladite seconde unité de référence d'horloge (CRUB) et chacune desdites au moins une matrice de commutation (SWITCHw, SWITCHs),
dans lequel ladite première voie de transmission de synchronisation (18) comprend en outre une pluralité de connexions directes allant de ladite première unité de référence d'horloge (CRUA) à ladite pluralité de ports,
dans lequel ladite seconde voie de transmission de synchronisation (18) comprend en outre une pluralité de connexions directes allant de ladite seconde unité de référence d'horloge (CRUB) à ladite pluralité de ports,
dans lequel chacune desdites connexions transporte la même information d'horloge et de synchronisation à une fréquence SDH/SONET, ou des sous-multiples de celle-ci,
dans lequel en outre un signal transporté par lesdites première et seconde voies de transmission de synchronisation (18) est structuré en trames,
dans lequel en outre chacun de ladite pluralité de ports (PORT) et chacune des au moins une matrices de commutation (SWITCHw, SWITCHs) qui sont connectées aux première et seconde unités de référence d'horloge (CRUA, CRUB) comprend des moyens de sélection (SEL_{P}, SEL_{W}, SEL_{S}) destinés à choisir entre un premier signal d'horloge émis par ladite première unité de référence d'horloge (CRUA) et un second signal d'horloge émis par ladite seconde unité de référence d'horloge (CRUB).

2. Appareil selon la revendication 1, dans lequel ladite voie de transmission de synchronisation transporte également une information de diffusion, comprenant des états, des alarmes, des préréglages et des commandes de dimensionnement.

3. Appareil selon la revendication 1 ou 2, dans lequel ledit dispositif comprend une liaison de connexion (16) entre les première et seconde unités de référence d'horloge (CRUA, CRUB) et des moyens destinés à maintenir les unités de référence d'horloge (CRUA, CRUB) correctement alignées.

4. Appareil selon l'une quelconque des revendications précédentes, dans lequel chacune des unités de référence d'horloge (CRUA, CRUB) comprend un générateur de trames destiné à générer des trames, lesdites trames comprenant un mot d'alignement de trame, des informations de compteur codées et des informations de commande associées à des défaillances possibles de l'unité de référence d'horloge et des préférences exprimées pour une unité de référence d'horloge.

5. Appareil selon l'une quelconque des revendications précédentes, dans lequel lorsque des données utiles OTU sont générées à partir de données utiles SDH/SONET, la fréquence OTU est établie à une fréquence nominale qui est la fréquence SDH/SONET multipliée par un coefficient approprié.

6. Appareil selon l'une quelconque des revendications précédentes, dans lequel un retard programmable (7-2, 7-3, ..., 7-n) est prévu dans les connexions desdites première et seconde voies de transmission de synchronisation (18).
